(19) Europäisches Patentamt
European Patent Office
Office européen des brevets

(11) Veröffentlichungsnummer: **0 131 125**
**A1**

# (12) EUROPÄISCHE PATENTANMELDUNG

(21) Anmeldenummer: **84106020.5**

(22) Anmeldetag: **26.05.84**

(51) Int. Cl.[4]: **C 09 D 5/44**
C 09 D 3/58, C 08 G 59/62
C 08 G 59/56

(30) Priorität: **24.06.83 DE 3322782**

(43) Veröffentlichungstag der Anmeldung:
**16.01.85 Patentblatt 85/3**

(84) Benannte Vertragsstaaten:
**AT BE CH DE FR GB IT LI NL SE**

(71) Anmelder: **BASF Farben + Fasern Aktiengesellschaft**
**Am Neumarkt 30**
**D-2000 Hamburg 70(DE)**

(72) Erfinder: **Geist, Michael, Dr.**
**Rubensstrasse 251**
**D-4400 Münster(DE)**

(72) Erfinder: **Diefenbach, Horst, Dr.**
**Lerchenhain 8**
**D-4405 Nottuln(DE)**

(74) Vertreter: **Habbel, Hans-Georg, Dipl.-Ing.**
**Postfach 3429 Am Kanonengraben 11**
**D-4400 Münster(DE)**

## (54) Hitzehärtbare Bindemittelmischung.

(57) Die hitzehärtbare Bindemittelmischung aus Basis organischer Harze besteht aus einem organischen nicht sauren Harz mit einem Gehalt an reaktiven Hydroxyl- und Aminogruppen von wenigstens 0,2 Äquivalent in 100 g Harz und mit einem Molekulargewicht von wenigstens 850 und einem Vernetzungsmittel auf Basis einer organischen Verbindung, die mindestens 2 ß-Hydroxyalkyl-estergruppen enthält. Die Bindemittelmischung kann zusätzlich Pigmente, Füllstoffe, Vernetzungskatalysatoren, Korrosionsschutzinhibitoren und weitere Lackhilfsmittel enthalten. Die Bindemittelmischung findet Verwendung bei einem Verfahren zum Herstellen von Überzügen durch Aufbringen eines Überzugsmittels auf ein Substrat in Form eines Filmes und anschließendes Aushärten des Filmes durch Einbrennen.

EP 0 131 125 A1

Croydon Printing Company Ltd.

PAT 83 004
30.05.1983

BASF Farben + Fasern Aktiengesellschaft, Hamburg

# Hitzehärtbare Bindemittelmischung

Die Erfindung betrifft eine hitzehärtbare Bindemittelmischung auf Basis eines organischen Harzes, das reaktive Hydroxyl- und Aminogruppen enthält, zur Herstellung von Lacken.

Zur Härtung durch Vernetzung der Bindemittel in Lackfilmen wurden vielerlei chemische Reaktionen vorgeschlagen und auch eingesetzt. Die während der Vernetzungsreaktion entstehenden chemischen Bindungen genügen häufig nicht allen Anforderungen, die an die Lackfilme gestellt werden.

Für die Grundierung von elektrisch leitfähigen Substraten hat in den letzten Jahren die Elektrotauchlackierung weite Verbreitung gefunden. Im Vordergrund stand bisher die anodische Elektrotauchgrundierung. Die hierfür eingesetzten Harzbindemittel gehören zu den Carboxylgruppen enthaltenden Harzen, z.B. zu den Maleinatölen, maleinisierten Epoxidharzen, Alkydharzen, Acrylharzen und insbesondere zu den maleinisierten Polybutadienen. Durch Salzbildung, vornehmlich mit Aminen, wurden diese Harze wasserlöslich gemacht und an der Anode im Elektrotauchbad durch Strom abgeschieden. Das anodische Elektrotauchgrundierungsverfahren enthält jedoch schwerwiegende Nachteile. So wird während der elektrischen Abscheidung an der Anode Sauerstoff entwickelt, der die sich an der Anode abscheidenden Harze in schwerwiegender, nachteiliger Art

und Weise verändern kann. Desweiteren gehen an der Anode Metallionen in Lösung, die im eingebrannten Film als Störstellen enthalten sind. Die Metallionen können zur Verfärbung und Fleckenbildung führen. Qualitative Nachteile verursachen sie insbesondere durch Salzbildung und damit durch Herabsetzung der Wasserfestigkeit und des Korrosionsschutzes.

Das in den letzten Jahren zur Marktreife entwickelte kathodische Elektrotauchgrundierverfahren verdrängt in zunehmendem Maße das anodische Verfahren, da die oben beschriebenen Mängel weitgehend vermieden werden. So bildet sich an der Kathode, an der nun der Lackfilm abgeschieden wird, während des Abscheidevorganges Wasserstoff, der das Harzbindemittel nicht beeinflußt. Da im annähernd neutralen pH-Bereich die kathodische Abscheidung erfolgen kann, gehen kaum Metallionen in Lösung. Die für die kathodische Abscheidung geeigneten Bindemittel enthalten überwiegend Aminogruppen, die zur Wasserlöslichmachung mit Säuren neutralisiert werden.
Zur Härtung der nach dem kathodischen Elektrotauchgrundierverfahren applizierbaren Bindemittel werden zur Zeit überwiegend noch Vernetzungsmittel mit blockierten Isocyanatgruppen eingesetzt. In neuerer Zeit sind jedoch auch andere Vernetzungsreaktionen vorgeschlagen worden, so zum Beispiel in der EP 12 463 B1. Dort werden Hydroxylgruppen tragende Bindemittel durch Umesterung mit ß-Hydroxylalkylestern vernetzt. Diese Bindemittel weisen zur Solubilisierung tertiäre Stickstoffatome im Bindemittel auf. Von diesen muß ein hoher Anteil neutralisiert werden. Daraus resultiert ein niedriger Bad-pH-Wert. Dennoch ist die Stabilität einer Dispersion eines derartigen Bindemittels mit einem ß-Hydroxyalkylestergruppen enthaltenden Vernetzers nicht gut.
Zur Verbesserung dieses Standes der Technik wurde in der DE-OS 3 103 642 vorgeschlagen, anstelle der reaktiven Hydroxylgruppen Aminogruppen zur Vernetzung einzusetzen.

Die beiden letztgenannten Verfahren führen zu Lackfilmen mit ausreichenden Eigenschaften. Man erzielt jedoch eine deutliche Verbesserung der Produkte, wenn man zur Vernetzung eine Mischung aus reaktiven Hydroxyl- und Aminogruppen in das Bindemittelmolekül einführt. Diese Produkte weisen eine bessere Lager- und Badstabilität auf. Die Elektrotauchbäder sind bei geeigneter Kombination von Hydroxyl- und Aminogruppen leichter zu steuern. Der pH-Wert kann besser am Neutralpunkt gehalten werden. Die Lackfilme selbst weisen einen verbesserten Korrosionsschutz auf.

Aufgabe der Erfindung ist also eine Verbesserung des beschriebenen Standes der Technik. Die Überzugsmittel auf Basis der erfindungsgemäßen Bindemittelmischung sollen ferner für alle Arten von Applikationsverfahren geeignet sein, d.h. die Bindemittelmischung soll für konventionell zu verarbeitende Einbrennlacke ebenfalls verwendet werden können. Nach Neutralisation der Aminogruppen soll die Bindemittelmischung auch für das Elektrotauchlackierverfahren geeignet sein.

Diese Aufgabe wird bei einer Bindemittelmischung der genannten Art erfindungsgemäß dadurch gelöst, daß sie aus den Komponenten

A) einem organischen, nicht sauren Harz mit einem Gehalt an endständigen Hydroxylgruppen und primären und/oder sekundären Aminogruppen von wenigstens 0,2 Äquivalent in 100 g Harz und mit einem Molekulargewicht von wenigstens 850

B) einem Vernetzungsmittel auf Basis einer organischen Verbindung, die mindestens 2 ß-Hydroxyalkylestergruppen pro Molekül enthält, besteht.

Die Bindemittelmischung enthält vorteilhaft zusätzlich zu den Komponenten A und B als Komponente C Pigmente,

Füllstoffe, Vernetzungskatalysatoren, Korrosionsschutzinhibitoren und weitere Lackhilfsmittel.

Vorteilhaft betragen der Anteil der Komponente A 50 - 95 Gew.-% und der der Komponente B 5 - 50 Gew.-%, wobei die Summe der Komponenten A und B 100 % beträgt.

Während des Einbrennvorganges reagieren nun die ß-Hydroxyalkylestergruppen der Komponente B mit den Hydroxyl- und Aminogruppen der Komponente A unter Ausbildung von Ester- und Amidbrücken. Der Vernetzungsmechanismus ist im Prinzip im folgenden Reaktionsschema beschrieben:

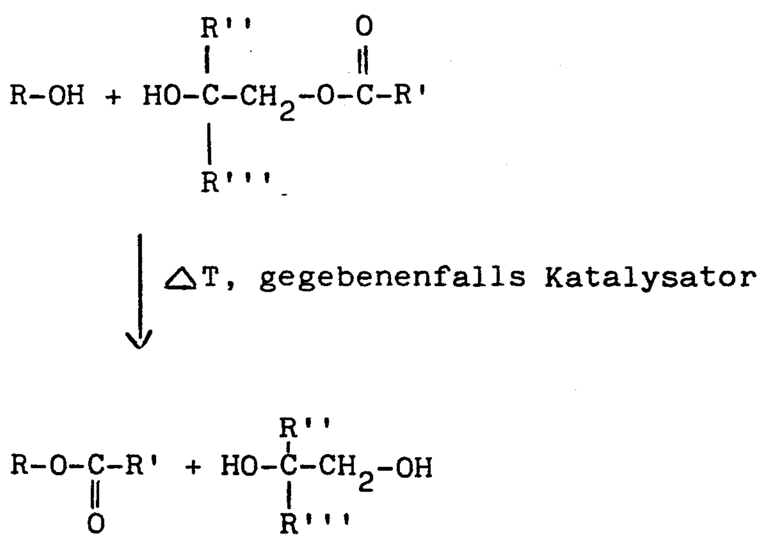


beziehungsweise

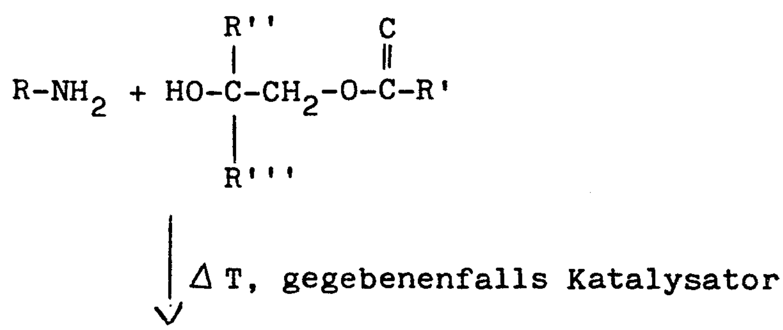

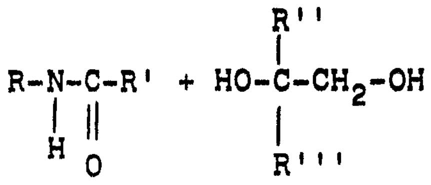

R = Bindemittel
R' = Vernetzer
R'', R''' = H oder org. Rest

Die abgespaltenen Diole weisen vorzugsweise so einen Siedepunkt auf, der sie während des Einbrennvorganges vorteilhaft als Verlaufhilfsmittel wirken läßt.

Die während des Einbrennens entstehende Ester- und Amidbindungen wirken sich sehr vorteilhaft auf die Haftung des Films, insbesondere auf Metallsubstraten, aus. Ebenso wird hierdurch die Elastizität des Filmes gesteigert. Dieser Vernetzungsmechanismus bedingt eine hohe Beständigkeit des Lackfilms gegen Lösungsmittel, Alkalien und Salzsprühnebel. Bereits auf nicht vorbehandeltem Eisenblech bilden die Filme auch ohne Korrosionsschutzinhibitoren sehr resistente Überzüge aus.
Die Komponente A der Bindemittelmischung weist vorteilhaft eine zahlenmittlere Molmasse von 850 bis 20 000 auf, vorzugsweise 1000 bis 10 000. Bei Verwendung der Bindemittelmischung für das Elektrotauchlackierverfahren enthält die Komponente A primäre und/oder sekundäre Aminogruppen und endständige Hydroxylgruppen. Gegebenenfalls können zusätzlich auch tertiäre Aminogruppen oder quartäre Ammoniumgruppen vorhanden sein.

Das Einführen der primären und/oder sekundären Aminogruppen in das organische Harz zur Herstellung der Komponente A erfolgt vorzugsweise durch Reaktion eines Polyamins und/oder eines amino- und/oder hydroxylgruppenhaltigen Ketimins mit Harzen, die mindestens eine,

vorzugsweise mindestens zwei Epoxidgruppen oder Isocyanatgruppen je Molekül enthalten.

Die Komponente A kann aber auch durch andere Anlagerungsreaktionen erhalten werden, z.B. durch Verestern oder Amidieren von primäre und/oder sekundäre Aminogruppen tragende Verbindungen mit hierfür geeignete Gruppen enthaltende Harze.

Als besonders geeignet für die Herstellung der Komponente A erweisen sich epoxidgruppenhaltige Harze mit vorzugsweise endständigen Epoxidgruppen aus der Gruppe der Polyglycidylether, Polyglycidylester und der Polyglycidylamine.

Andere vorteilhaft geeignete epoxidgruppenhaltige Harze sind Copolymerisate von Acrylsäure- und/oder Methacrylsäureglycidylester oder einer anderen, eine Glycidylgruppe tragende, olefinisch ungesättigten, polymerisierbaren Verbindung mit Alkyl- und/oder Hydroxyalkylestern der Acryl- und/oder Methacrylsäure, und/oder Vinylverbindungen wie Styrol, Vinyltoluol oder Vinylcarbazol.

Eine weitere bevorzugt geeignete Harzgruppe sind teilepoxidierte Polybutadienöle.

Unter Polyglycidylether im Rahmen dieser Erfindung werden vorzugsweise solche Polyglycidylether der allgemeinen Formel

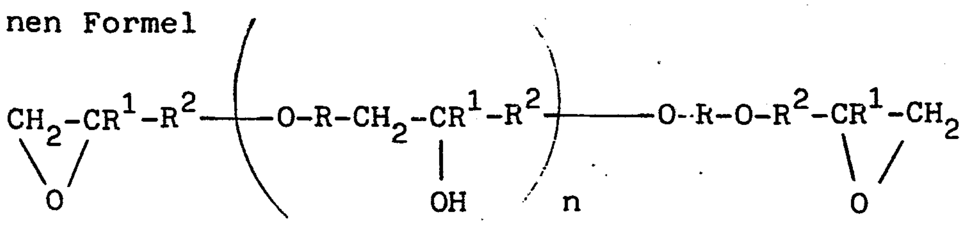

mit

R = 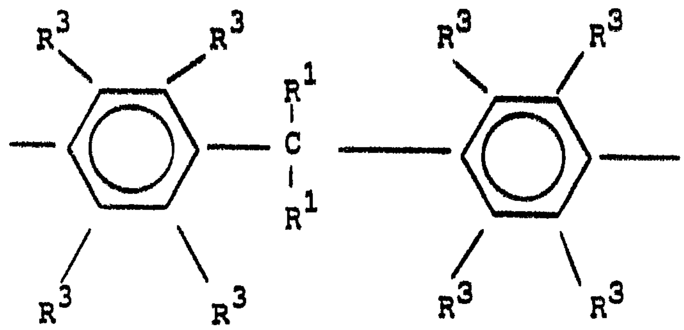

$R^1$ = H oder $C_nH_{2n} + 1$

$R^2 = CR^1_{2\ n}$

$R^3 = R^1$, Halogen und bevorzugt H

n = 0 bis 5

verstanden.

Die Polyglycidylether der aufgeführten allgemeinen Formel haben eine zahlenmittlere Molmasse von etwa 340 bis 5 000 und dementsprechend ein Epoxidäquivalentgewicht von 170 bis 2 500. Die Epoxidharze können auch hydriert oder teilhydriert eingesetzt werden. Zur Steuerung der Filmeigenschaften kann ein Teil der reaktionsfähigen Gruppen des Epoxidharzes mit anderen Verbindungen umgesetzt werden.
Hierfür bieten sich an:

a) Carboxylgruppenhaltige Verbindungen wie gesättigte oder ungesättigte Monocarbonsäure (z.B. Benzoesäure, Leinölfettsäure, 2-Ethylhexansäure, Versaticsäure), aliphatische, cycloaliphatische und/oder aromatische Dicarbonsäuren verschiedener Kettenlängen (z.B. Adipinsäure, Sebacinsäure, Isophthalsäure oder dimere Fettsäuren), Hydroxyalkylcarbonsäuren (z.B. Milchsäure, Dimethylolpropionsäure) sowie carboxylgruppenhaltige Polyester oder

b) Aminogruppenhaltige Verbindungen wie Diethylamin oder Ethylhexylamin oder Diamine mit sekundären Aminogruppen, wie z.B. N,N'-Dialkylalkylendiamin wie Dimethylethylendiamin, N,N'-Dialkyl-polyoxialkylenamin wie N,N'-Dimethyl-polyoxipropylendiamin, Polyaminoamide wie Versamide oder das Umsetzungsprodukt von einem Mol Diaminohexan mit zwei Molen Monoglycidylether oder Monoglycidylester, speziell Glycidylester α-verzweigter Fettsäuren wie der Versaticsäure, oder

c) Hydroxylgruppenhaltige Verbindungen wie Neopentylglykol, bisethoxyliertes Neopentylglykol, Hydroxypivalinsäureneopentylglykolester, Hexandiol-1,6, Hexandiol-2,5, 1,4-Bis-(hydroxymethyl)-cyclohexan, 1,1-Isopropyliden-bis-(p-phenoxy)-2-propanol, Trimethylolpropan, Pentaerythrit oder Aminoalkohole wie Triethanolamin, Methyldiethanolamin oder hydroxylgruppenhaltige Alkylketimine wie Aminomethylpropandiol-1,3-methyl-isobutylketimin sowie auch Polyglykolether, Polyesterpolyole, Polyetherpolyole, Polycaprolactonpolyole verschiedener Funktionalität und Molekulargewichte.

Anstelle der Polyglycidylether auf Basis Bisphenol A können auch Polyglycidylether auf Basis anderer Grundkomponenten wie Triglycidylisocyanurat, heterocyclische Diglycidylverbindungen oder Diglycidylhydantoine eingesetzt werden.

Als Polyglycidylester sind Umsetzungsprodukte von z.B. Terephthalsäurebisglycidylester oder Isophthalsäurebisglycidylester mit z.B. Bisphenol A geeignet. Das Epoxidäquivalentgewicht dieser Produkte liegt zwischen 200 bis 2 500. Zur Steuerung der Filmeigenschaften kann ein

Teil der verbliebenen, reaktiven Glycidylgruppen mit anderen Verbindungen umgesetzt werden. Hierfür bieten sich die oben unter a, b und c genannten Verbindungen an.

Unter Polyglycidylaminen werden solche glycidylgruppenhaltige Harze verstanden, die man durch Einführung von Glycidylgruppen über z.B. Epichlorhydrin in $NH_2$-funktionelle Harze erhält.

Bevorzugt geeignet sind auch Copolymerisate von Acryl- und/oder Methacrylsäureglycidylester oder einer anderen, eine Glycidylgruppe tragende, olefinisch ungesättigten, polymerisierbaren Verbindung mit Estern der Acryl- und/oder Methacrylsäure sowie polymerisierbaren Vinylverbindungen, die eine zahlenmittlere Molmasse von 700 bis 10 000 und ein Epoxidäquivalentgewicht von 600 bis 3 000 aufweisen. Bevorzugt sind die Acrylsäureester mit $C_2$ bis $C_8$-Alkohole und die Methacrylsäureester mit $C_1$ bis $C_4$-Alkohole. Die Copolymerisate können weitere Monomere enthalten wie Hydroxyalkyl(meth)acrylat oder (Meth)-acrylamid. Die Copolymerisation erfolgt in wohlbekannter Weise durch Lösungs-, Suspensions- oder Emulsionspolymerisation mit Zusatz radikalischer Initiatoren wie Peroxiden, Hydroperoxiden, Perestern oder thermolabiler Azoverbindungen sowie gegebenenfalls Molekulargewichtsreglern.

Unter teilepoxidierten Polybutadienölen werden Umsetzungsprodukte verstanden, die durch Reaktion von handelsüblichen Polybutadienölen mit Persäuren bzw. organischen Säure-$H_2$-$O_2$-Mischungen erhalten werden. Die Darstellungsmethode wird z.B. in der Chemiker-Zeitung 95, 857 f. (1971) beschrieben.

Zur Herstellung wasserdispergierbarer Bindemittel werden die epoxidgruppenhaltigen Harze mit Polyaminen und/ oder einem amino- und/oder hydroxylgruppenhaltigen Ketimin umgesetzt. Wird die Anlagerung der primären und sekundären Aminogruppen tragenden Verbindungen in Form ihrer Ketimine durchgeführt, so sind die Reaktionsbedingungen so zu führen, daß im Reaktionsprodukt keine die Ketimine zersetzende Substanzen verbleiben. Bei den bevorzugten Ketiminen handelt es sich um Umsetzungsprodukte aus Ketonen und Hydroxyl- oder sek. Aminogruppen enthaltende Alkylamine oder Alkyldiamine mit der allgemeinen Struktur $R - NH - R - NH_2$ bzw. $HO - R - NH_2$. Die Ketimine weisen z.B. folgende Struktur auf:

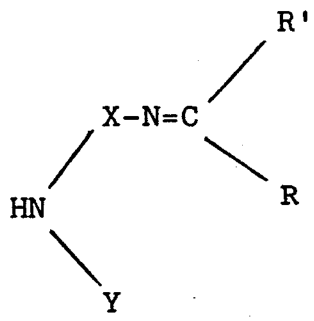

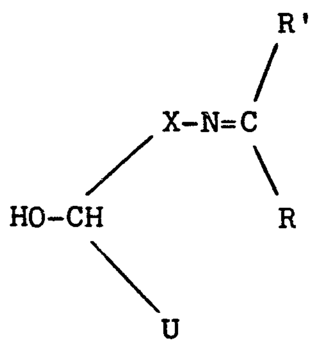

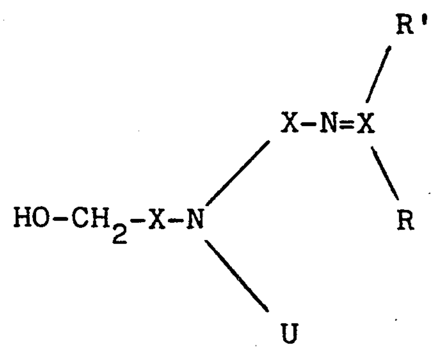

wobei bedeuten:

$X = -(CR_2)_n-$

$R = -H, -R'$

$R' = -C_mH_{2m+1}, -C_6H_{11}$

$U = -R, -Y$

$Y = -X-N{=}C(R')(R)$ , $-X-OH$, $-R'$ oder $-CH_2-CH(OH)-CH_2-O-Z-R'$

$Z = CO, -X$

$n = 1 - 6$

$m = 1 - 12$

Die zur Reaktion mit den primären Aminogruppen eingesetzten Ketone sind im allgemeinen aliphatische Ketone wie Methylethylketon, Diethylketon, Methylisobutylketon, Ethyl-n-propylketon und cycloaliphatische Ketone wie Cyclopentanon und Cyclohexanon. Bei den bevorzugten Aminoalkylaminen und Alkanolaminen handelt es sich überwiegend um Diethylentriamin, N-Methyl-ethylendiamin, N-Methylpropylendiamin, N-Aminoethyl-piperazin, 2-Aminoethanol, 1-Aminopropanol-2, 1-Aminopropanol-3, 2-Amino-2-methylpropanol-1, 3-Amino-2,2-dimethyl-propanol-1, 1,5-Diaminopentanol-3 oder N-(2-Aminoethyl)-N-(2-hydroxyethyl)-ethylendiamin.

Die exotherme Addition der oben beschriebenen Aminoketimine an die Epoxidgruppen des Basisharzes der Bindemittelkomponente A erfolgt im allgemeinen bei Raumtemperatur. Zur vollständigen Umsetzung wird die Reaktion häufig bei Temperaturen zwischen 50 und 125°C beendet.

Die Addition der Hydroxyketimine an die Epoxidgruppen des Basisharzes der Bindemittelkomponente A erfolgt in der Regel im gleichen Temperaturbereich, jedoch ist die Verwendung eines basischen Katalysators wie N,N-Dimethylbenzylamin oder auch eines Friedel-Crafts-Katalysators wie Zinn-II-Chlorid ratsam.

Die Einführung von reaktiven Hydroxylgruppen gelingt

sehr leicht durch die Verwendung von sek. Alkanolaminen wie Methylethanolamin, Diethanolamin, Diisopropanolamin, Butylethanolamin, Cyclohexylethanolamin und anderer.

Die Bindemittelkomponente B, das Vernetzungsmittel, ist eine Verbindung, die mindestens 2 ß-Hydroxyalkylestergruppen enthält. Das Vernetzungsmittel kann eine niedermolekulare Verbindung oder ein entsprechend substituiertes Harz sein. Wird zur Veresterung kein Alkohol mit einer zusätzlichen OH-Gruppe am ß-Kohlenstoffatom eingesetzt, sondern Monoalkohole wie Methyl-, Ethyl- oder Butylalkohol, so läuft die Vernetzungsreaktion wesentlich langsamer ab.
Die Vernetzungsrate ist in diesem Fall zu gering, der eingebrannte Film ist gegen Lösungsmittel nicht ausreichend beständig. Diese Nachteile werden umgangen, wenn erfindungsgemäß ß-Hydroxyalkylester zur Vernetzungsreaktion eingesetzt werden. Die Verbindungen, die den Vernetzer bilden, sind bevorzugt Polyesterharze, es können aber auch andere Verbindungen eingesetzt werden, die freie Carboxylgruppen enthalten und einer Veresterung zugänglich sind.

Polyfunktionelle Vernetzer können vorteilhaft auf folgende Weise dargestellt werden. Zuerst werden äquivalente Anteile eines Dicarbonsäureanhydrids (Phthalsäureanhydrid, Hexahydrophthalsäureanhydrid, Trimellithsäureanhydrid, Succinsäureanhydrid) mit einem Polyol (Glycerin, Trimethylolpropan, Pentaerythrit, Dipentaerythrit) bei Temperaturen unterhalb 145°C umgesetzt. Das entstandene saure Zwischenprodukt wird dann mit äquivalenten Anteilen eines Epoxyalkans zum Endprodukt umgesetzt.

Vorteilhaft ist die Komponente B ein Polyacrylatharz aus den folgenden Monomeren:

a) 10 - 50 Gew.-% Acrylsäurealkylester mit 1 bis 18 Kohlenstoffatomen im Alkylrest und/oder Methacrylsäureester mit 2 bis 18 Kohlenstoffatomen im Alkylrest,

b) 0 - 60 Gew.-% Methacrylsäuremethylester,

c) 0 - 35 Gew.-% Styrol, α-Methylstyrol, o- und/oder p-Chlorstyrol, p-tert.-Butylstyrol, Vinyltoluol und/oder Vinylcarbazol und

d) 2 - 35 Gew.-% Acrylsäure- und/oder Methacrylsäure--Hydroxylalkylester oder einer anderen ß-Hydroxyalkylestergruppen enthaltenden olefinischen, ungesättigten polymerisierbaren Verbindung, wobei die Summe der Bestandteile a, b, c und d 100 % beträgt.

Die erfindungsgemäße Bindemittelmischung kann in feinteiliger, fester Form oder gelöst in einem organischen Lösungsmittel vorliegen.

Für die Elektrotauchlackierung ist es erforderlich, daß die Bindemittelmischung nach Protonisierung mit Säure in Form einer wäßrigen Lösung oder Dispersion vorliegt.

Die Wasserlöslichkeit der Bindemittelkomponente wird durch Neutralisation der in ihnen enthaltenen primären, sekundären und/oder tertiären Aminogruppen mit Säuren bewirkt. Geeignete Säuren sind insbesondere organische Säuren, es kann jedoch auch beispielsweise Phosphorsäure eingesetzt werden. Bevorzugt werden die

Aminogruppen mit Ameisensäure, Essigsäure, Malonsäure, Milchsäure oder Zitronensäure neutralisiert.

Der Neutralisationsgrad der solubilisierenden Gruppen liegt, bezogen auf diese Gruppen, zwischen 0,2 bis 1,0 Äquivalent und bevorzugt zwischen 0,25 bis 0,6 Äquivalente Säure.

Die Neutralisation kann auf folgenden Wegen durchgeführt werden. Die Säure wird in Wasser, gegebenenfalls zusammen mit Dispergierhilfsmittel, vorgelegt und die Harzlösung wird bei Raumtemperatur oder gegebenenfalls bei erhöhten Temperaturen in das Wasser eingerührt. Die Säure kann aber auch direkt der Harzlösung zugegeben werden. Die neutralisierte Harzlösung kann nun in das Wasser eingerührt werden, gegebenenfalls kann man das Wasser auch langsam in die Harzlösung einarbeiten.

Die Dispersion kann zur Steuerung ihrer Viskosität, der Abscheidespannung und des Verlaufs bis zu 20 % organische Lösungsmittel enthalten. Enthält der Ansatz durch das gewählte Darstellungsverfahren zuviel oder gar für die Eigenschaften schädliche Lösungsmittel, so kann man diese vor dem Dispergieren aus der Harzlösung herausdestillieren oder man destilliert sie aus der wäßrigen Dispersion ab. Vorteilhaft für die Summe aller Eigenschaften ist ein möglichst geringer Anteil an organischen Lösungsmitteln.

Der Festkörper eines Abscheidebades, das mit der erfindungsgemäßen Dispersion angesetzt ist, beträgt 7 - 35 Gew.-Teile, bevorzugt aber 12 - 25 Gew.-Teile. Der pH-Wert des Abscheidebades liegt zwischen 4 und 8, vorzugsweise aber zwischen 5 und 7,5. Als Anoden des Abscheidebades werden nicht korrodierende Stahlanoden oder Graphitanoden verwendet. Die Temperatur des Badansatzes soll zwischen 15 bis 35°C, bevorzugt zwischen

20 und 30°C liegen. Die Abscheidedauer und -spannung werden so gewählt, daß die gewünschte Schichtstärke erreicht wird.

Nach der Abscheidung wird der beschichtete Gegenstand abgespült und ist zum Einbrennen bereit.

Unabhängig von dem Applikationsverfahren der auf Basis der erfindungsgemäßen Bindemittelmischung hergestellten Überzugsmittel erfolgt die Vernetzung des Lackfilms während des Einbrennens bei Temperaturen von 130 bis 200°C über eine Zeitdauer von 10 - 60 Minuten, bevorzugt bei 150 bis 180°C während 15 - 30 Minuten.

Die Vernetzungsreaktion kann durch geeignete Katalysatoren noch beschleunigt werden. Hierzu sind insbesondere geeignet Ammoniumverbindungen wie Benzyltrimethylammoniumhydroxid, Benzyltrimethylammoniumchlorid, Trimethylcetylammoniumbromid oder Tetraammoniumjodid und organische Zinnverbindungen wie Dibutylzinndilaurat und Eisen-III-acetylacetonat, Zinkacetat, Zink-2-ethylhexoat, Kobaltnaphthenat, Bleiacetat, Bleioctoat oder Butyltitanat. Wegen der hohen Reaktivität der Bindemittelkomponenten wird eine Beschleunigung der Vernetzungsreaktion bereits durch geringe Mengen Katalysator erreicht.
Die Pigmentierung erfolgt in wohlbekannter Weise. Hierbei werden die Pigmente sowie die üblichen Zusatzstoffe wie Füllstoffe, Korrosionsschutzinhibitoren und Antischaummittel (Komponente C) in einer der beiden Bindemittelkomponenten oder in einem Reibharz angemahlen. Als Mahlaggregate können z.B. Sandmühlen, Kugelmühlen oder Dreiwalzen verwendet werden. Die Komplettierung des Lackes kann, wie allgemein bekannt, erfolgen.

Die Erfindung betrifft ferner ein Verfahren zum Herstellen von Überzügen durch Aufbringen eines Überzugsmittels auf ein Substrat in Form eines Filmes durch Einbrennen, wobei das Überzugsmittel eine Bindemittelmischung enthält, die dadurch gekennzeichnet ist, daß die Mischung aus den Komponenten

A) einem organischen, nicht sauren Harz mit einem Gehalt an endständigen Hydroxylgruppen und primären und/oder sekundären Aminogruppen von wenigstens 0,2 Äquivalent in 100 g Harz und mit einem Molekulargewicht von wenigstens 850

B) einem Vernetzungsmittel auf Basis einer organischen Verbindung, die mindestens 2 ß-Hydroxyalkylestergruppen enthält, besteht.

Vorteilhafte Ausgestaltungen des erfindungsgemäßen Verfahrens ergeben sich aus den Unteransprüchen

Die Erfindung betrifft weiterhin die Verwendung einer Bindemittelmischung für die Herstellung von Überzügen, die dadurch gekennzeichnet ist, daß die Mischung aus den Komponenten

A) einem organischen, nicht sauren Harz mit einem Gehalt an endständigen Hydroxylgruppen und primären und/oder sekundären Aminogruppen von wenigstens 0,2 Äquivalent in 100 g Harz und mit einem Molekulargewicht von wenigstens 850

B) einem Vernetzungsmittel auf Basis einer organischen Verbindung, die mindestens 2 ß-Hydroxyalkylestergruppen enthält, besteht.

Vorteilhafte Ausgestaltungen der erfindungsgemäßen Verwendung ergeben sich aus den Unteransprüchen 23 bis 35.

Im folgenden wird die Erfindung anhand von Ausführungsbeispielen näher erläutert.

Darstellung eines tetrafunktionellen Vernetzungsmittels (Vernetzer 1)

4.272 g eines Umsetzungsprodukts aus Pentaerythrit und Caprolacton (1 : 4 Molen) werden in einem geeignet ausgerüsteten 20 l Reaktor mit 5304 g Trimellitsäureanhydrid vorgelegt und auf 160°C erhitzt. Sobald eine Säurezahl von 338 erreicht ist, kühlt man ab und beginnt bei 146°C langsam mit dem Zulauf von 2000 g Methylisobutylketon (MIBK). Hierdurch sinkt die Temperatur weiter ab. Dann gibt man bei 109°C 124 g eines Katalysators auf Chromsalzbasis zu und verdünnt mit 3000 g MIBK weiter. Man hält dann 95°C Temperatur und beginnt mit dem Zulauf von Butylenoxid. Man gibt solange Butylenoxid nach bis die Säurezahl unter 2 gefallen ist.

Kennwerte:

Festkörper: 74,4 % (130°C, 60 min.)
Säurezahl: 1,86

Darstellung eines polyfunktionellen Vernetzungsmittels auf Basis eines Polyacrylatharzes (Vernetzer 2)

560 g Xylol werden unter Stickstoff in einem 5 l Reaktor vorgelegt und auf Rückflußtemperatur erhitzt. Innerhalb von 4,5 Stunden wird eine Monomermischung aus 1 400 g Methylmethacrylat, 560 g 2-Hydroxypropylacrylat und 840 g Ethylhexylmethacrylat sowie 14 g Dodecylmercaptan zugetropft. Gleichzeitig wird 140 g tert.-Butylperoctoat in 200 g Xylol zudosiert. Anschließend wird bis zum Erreichen einer konstanten Viskosität von 4,1 dPa.s, 50 %ig in Xylol, nachpolymerisiert.

Das zahlenmittlere Molekulargewicht, gemessen durch Gelpermeationschromatographie, beträgt 2 100, die OH-Zahl 80.

Diese Harzlösung wird mit Ethylglykol auf einen Festkörper von 75 % eingestellt.

Herstellung einer Bindemitteldispersion 1

In einem geeigneten 5 l Reaktor werden 898 g eines handelsüblichen Epoxidharzes aus Basis Bisphenol A (Epoxidäquivalentgewicht EEW-188), 340 g Pluriol P 600 und 77 g Xylol vorgelegt und erwärmt. Bei 122°C werden 272 g Bisphenol A zugesetzt, bei 148°C werden 2 g Dimethylbenzylamin zugegeben. Durch die exotherme Reaktion steigt die Temperatur auf 168°C an. Man läßt die Temperatur auf 127°C absinken und gibt weitere 4 g Dimethylbenzylamin zu. Man hält die Temperatur von 130°C dann solange bis ein EEW von 1138 erreicht ist. Dann fügt man 89 g einer Lösung von Diethylentriaminbismethylisobutylketimin in MIBK (Aminäquivalentgewicht 122,4) und 99 g Diethanolamin zu. Die Temperatur steigt wieder an und man hält sie eine Stunde bei 115°C. Dann fügt man 1108 g des Vernetzers 1, 162 g Propylenglykolmonophenylether und 75 g Bleioctoat zu und mischt 15 Minuten bei 110°C unter.
Inzwischen bereitet man ein Dispergierbad aus 1461 g entionisiertem Wasser, 28,5 g Eisessig und 32 g einer Emulgatorlösung vor. Darin dispergiert man 2600 g der Harzlösung und fügt nach einer Stunde 1770 g Wasser zu.
Unter vermindertem Druck wird die Dispersion auf 43°C erwärmt und durch Auskreisen die organische Phase abgetrennt. Nachdem 245 g organische Phase abgetrennt sind, hebt man das Vakuum auf und filtriert die Dispersion.

Kenndaten der Dispersion 1

| | |
|---|---|
| Festkörper: | 36,8 % (30 min. 150°C) |
| pH-Wert: | 6,7 |
| MEQ-Säure: | 0,308 |
| MEQ-Base: | 0,680 |

Herstellung einer Bindemitteldispersion 2

Man verfährt wie in Beispiel 1, jedoch verwendet man das Vernetzungsmittel 2. Beim Aufarbeiten der Dispersion werden 160 g organische Phase verworfen.

Kenndaten der Dispersion 2:

| | |
|---|---|
| Festkörper: | 36,2 = (30 min. 150°C) |
| pH-Wert: | 6,9 |
| MEQ-Säure: | 0,320 |
| MEQ-Base: | 0,675 |

Herstellung einer Bindemitteldispersion 3

In einem geeignet ausgerüsteten 5 l Reaktor werden 1360 g eines handelsüblichen Epoxidharzes auf Basis Bisphenol A (EEW 188), 301 g 2,2-Dimethyl-1,3-propandiol und 83 g Xylol vorgelegt und erhitzt. Bei 123°C fügt man 11 g Dimethylbenzylamin zu. Nach der exothermen Reaktion hält man die Temperatur auf 135°C bis ein Epoxidäquivalentgewicht von 1110 erreicht ist. Dann kühlt man auf 90°C ab und fügt eine Mischung aus 121 g Diethanolamin und 106 g Diethylentriaminbismethylisobutylketimin, 72,5 %ig in Methylisobutylketon zu. Nach Ende der exothermen Reaktion hält man den Ansatz eine Stunde bei 115°C. Dann mischt man 162 g Propylenglykolmonophenylether, 72 g Bleioctoat und 744 g des Vernetzungsmittels 1 unter.

Inzwischen wird ein Dispergierbad aus 2410 g entionisiertem Wasser, 43 g Eisessig und 48 g einer Emulgatorlösung vorbereitet. Die Säurezahl dieses Bades beträgt 16,6. Darin wird das Harz dispergiert. Nach einer Stunde fügt man weitere 1539 g entionisiertes Wasser zu. Unter vermindertem Druck erwärmt man nun die Dispersion auf 50°C und trennt dabei 250 g organische Phase durch Auskreisen ab. Danach hebt man das Vakuum auf und filtriert die Dispersion

Kenndaten der Dispersion 3

| | |
|---|---|
| Festkörper: | 35,5 % (30 min, 150°C) |
| pH-Wert: | 6,8 |
| MEQ-Säure: | 0,315 |
| MEQ-Base: | 0,668 |

<u>Herstellung einer Bindemitteldispersion 4</u>

Man verfährt wie im Beispiel 3, jedoch wird hier das Vernetzungsmittel 2 eingesetzt. Beim Aufarbeiten der Dispersion werden 185 g organische Phase verworfen.
Kenndaten der Dispersion 4

| | |
|---|---|
| Festkörper: | 35,8 % (30 min. 150°C) |
| pH-Wert: | 6,7 |
| MEQ-Säure: | 0,305 |
| MEQ-Base | 0,683 |

<u>Darstellung einer grauen Pigmentpaste</u>

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 246 Teile eines Umsetzungsproduktes aus 126 Teilen Methylethanolamin und 120 Teilen 80 %iger, wässriger Milchsäure gegeben. Man führt die Reaktion bei 80°C

durch bis die Säurezahl unter 1 gefallen ist.

1800 Teile dieses Produkts werden mit 2447 Teilen entionisiertem Wasser vorgelegt und mit 2460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinheit von 5 - 7 zerkleinert. Danach gibt man 1255 entionisiertes Wasser zu, um die gewünschte Pastenkonsistenz zu erreichen. Diese graue Paste ist sehr lagerstabil.

Beispiel 8

Zubereitung der Elektrotauchbäder und Abscheidung

500 Gewichtsteile der Bindemitteldispersionen werden mit 196 Teilen der im Beispiel 6 beschriebenen Pigmentpaste versetzt und mit entionisiertem Wasser auf einen Badfestkörper von 20 % eingestellt. Die Abscheidung der Lackfilme erfolgt während 2 Minuten auf zinkphosphatiertem Blech. Die Badtemperatur beträgt 27°C. Die Filme werden bei 180°C 20 Minuten eingebrannt.

Auswertung der abgeschiedenen und eingebrannten Filme

| | Dispersion 1 | Dispersion 2 | Dispersion 3 | Dispersion 4 |
|---|---|---|---|---|
| Abscheidespannung V | 320 | 310 | 340 | 320 |
| Schichtdicke /um | 18 | 23 | 17 | 21 |
| Verlauf * | 0 | 0,5 | 0 | 0 |
| Krater * | 0 | 0,5 | 0 | 0,5 |
| MIBK-Test ** | i.O. | i.O. | i.O. | i.O. |
| Reverse impact (inch pound) | 80 | 60 | 80 | 80 |

* Bester Wert = 0, schlechtester Wert 5

** MIBK-Test = 20 Doppelhübe eines MIBK getränkten Lappens über den eingebrannten Film

EUP 84 106 020.5

BASF Farben + Fasern Aktiengesellschaft

Patentansprüche:

1. Hitzehärtbare Bindemittelmischung auf Basis organischer Harze, dadurch gekennzeichnet, daß sie aus den Komponenten
A) einem organischen, nicht sauren Harz mit einem Gehalt an endständigen Hydroxylgruppen und primären und/oder sekundären Aminogruppen von wenigstens 0,2 Äquivalent in 100 g Harz und mit einem Molekulargewicht von wenigstens 850 und
B) einem Vernetzungsmittel auf Basis einer organischen Verbindung, die mindestens 2 β-Hydroxyalkylestergruppen pro Molekül enthält, besteht.

2. Bindemittelmischung nach Anspruch 1, dadurch gekennzeichnet, daß sie zusätzlich zu den Komponenten A und B als Komponente C Pigmente, Füllstoffe, Vernetzungskatalysatoren, Korrosionsschutzinhibitoren und weitere Lackhilfsmittel enthält.

3. Bindemittelmischung nach Anspruch 1 und 2, dadurch gekennzeichnet, daß der Anteil der Komponente A 50 - 95 Gew.-% und der der Komponente B 5 - 50 Gew.-% betragen, wobei die Summe der Komponenten A und B 100 % beträgt.

4. Bindemittelmischung nach Anspruch 1 bis 3, dadurch gekennzeichnet, daß die Komponente A eine zahlenmittlere Molmasse von 500 - 20 000 aufweist.

5. Bindemittelmischung nach Anspruch 1 bis 4, dadurch gekennzeichnet, daß die Komponente B eine zahlenmittlere Molmasse von 200 - 10 000 aufweist.

6. Bindemittelmischung nach Anspruch 1 bis 5, dadurch gekennzeichnet, daß die Komponente B ein Polyacrylatharz aus den folgenden Monomeren ist:

a) 10 - 50 Gew.-% Acrylsäurealkylester mit 1 bis 18 Kohlenstoffatomen im Alkylrest und/oder Methacrylsäureester mit 2 bis 18 Kohlenstoffatomen im Alkylrest,

b) 0 - 60 Gew.-% Methacrylsäuremethylester,

c) 0 - 35 Gew.-% Styrol, α-Methylstyrol, o- und/oder p-Chlorstyrol, p-tert.-Butylstyrol, Vinyltoluol und/oder Vinylcarbazol und

d) 2 - 35 Gew.-% Acrylsäure- und/oder Methacrylsäure-β-Hydroxyalkylester oder einer anderen β-Hydroxylalkylestergruppen enthaltenden, olefinischen, ungesättigten, polymerisierbaren Verbindung, wobei die Summe der Bestandteile a, b, c und d 100 % beträgt.

7. Bindemittelmischung nach Anspruch 1 bis 6, dadurch gekennzeichnet, daß sie in feinteiliger, fester Form vorliegt.

8. Bindemittelmischung nach Anspruch 1 bis 6, dadurch gekennzeichnet, daß sie gelöst in einem organischen Lösungsmittel vorliegt.

9. Bindemittelmischung nach Anspruch 1 bis 6, dadurch gekennzeichnet, daß sie nach Protonisierung mit Säure in Form einer wäßrigen Lösung oder Dispersion vorliegt.

10. Verfahren zum Herstellen von Überzügen durch Aufbringen eines Überzugsmittels auf ein Substrat in Form eines Filmes und anschließendes Aushärten des Filmes durch Einbrennen, wobei das Überzugsmittel eine Bindemittelmischung enthält, dadurch gekennzeichnet, daß die Mischung aus den Komponenten

A) einem organischen, nicht sauren Harz mit einem Gehalt an endständigen Hydroxylgruppen und primären und/oder sekundären Aminogruppen von wenigstens 0,2 Äquivalent in 100 g Harz und mit einem Molekulargewicht von wenigstens 850 und

B) einem Vernetzungsmittel auf Basis einer organischen Verbindung, die mindestens 2 β-Hydroxyalkylestergruppen enthält, besteht.

11. Verfahren nach Anspruch 10, dadurch gekennzeichnet, daß die Mischung zusätzlich zu den Komponenten A und B als Komponente C Pigmente, Füllstoffe, Vernetzungskatalysatoren, Korrosionsschutzinhibitoren und weitere Lackhilfsmittel enthält.

12. Verfahren nach Anspruch 10 und 11, dadurch gekennzeichnet, daß der Anteil der Komponente A

50 - 95 Gew.-% und der der Komponente B 5 - 50 Gew.-% betragen, wobei die Summe der Komponenten A und B 100 % beträgt.

13. Verfahren nach Anspruch 10 bis 12, dadurch gekennzeichnet, daß die Komponente A eine zahlenmittlere Molmasse von 500 - 20 000 aufweist.

14. Verfahren nach Anspruch 10 bis 13, dadurch gekennzeichnet, daß die Komponente B eine zahlenmittlere Molmasse von 200 - 10 000 aufweist.

15. Verfahren nach Anspruch 10 bis 14, dadurch gekennzeichnet, daß die Komponente B ein Polyacrylatharz aus den folgenden Monomeren ist:

a) 10 - 50 Gew.-% Acrylsäurealkylester mit 1 bis 18 Kohlenstoffatomen im Alkylrest und/oder Methacrylsäureester mit 2 bis 18 Kohlenstoffatomen im Alkylrest,

b) 0 - 60 Gew.-% Methacrylsäuremethylester,

c) 0 - 35 Gew.-% Styrol, α-Methylstyrol, o- und/oder p-Chlorstyrol, p-tert.-Butylstyrol, Vinyltoluol und/oder Vinylcarbazol und

d) 2 - 35 Gew.-% Acrylsäure- und/oder Methacrylsäure-β-Hydroxylalkylester oder einer anderen β-Hydroxylalkylestergruppen enthaltenden, olefinischen, ungesättigten, polymerisierbaren Verbindung, wobei die Summe der Bestandteile a, b, c und d 100 % beträgt.

16. Verfahren nach Anspruch 10 bis 15, dadurch gekennzeichnet, daß das Überzugsmittel in feinteiliger, fester Form vorliegt.

17. Verfahren nach Anspruch 16, dadurch gekennzeichnet, daß das Aufbringen des Überzugsmittels durch eine elektrostatische Pulversprüheinrichtung erfolgt.

18. Verfahren nach Anspruch 10 bis 15, dadurch gekennzeichnet, daß die Bindemittelmischung gelöst in einem organischen Lösungsmittel vorliegt.

19. Verfahren nach Anspruch 18, dadurch gekennzeichnet, daß das Aufbringen des Überzugsmittels durch Spritzen, Tauchen, Fluten, Walzen, Rakeln oder dergleichen erfolgt.

20. Verfahren nach Anspruch 10 bis 15, dadurch gekennzeichnet, daß ein elektrisch leitendes Substrat in ein wäßriges Bad des mindestens teilweise durch Säure neutralisierten Überzugsmittels, das ggf. zusätzlich organische Lösungsmittel enthält, eingetaucht und als Kathode geschaltet wird, der Film mittels Gleichstrom auf dem Substrat abgeschieden wird, das Substrat aus dem Bad entfernt wird und der Film durch Einbrennen gehärtet wird.

21. Verwendung einer Bindemittelmischung für die Herstellung von Überzügen, dadurch gekennzeichnet, daß die Mischung aus den Komponenten
A) einem organischen, nicht sauren Harz mit einem Gehalt an endständigen Hydroxylgruppen

und primären und/oder sekundären Aminogruppen von wenigstens 0,2 Äquivalent in 100 g Harz und mit einem Molekulargewicht von wenigstens 850 und

B) einem Vernetzungsmittel auf Basis einer organischen Verbindung, die mindestens 2 β-Hydroxyalkylestergruppen enthält, besteht.

22. Verwendung nach Anspruch 21, dadurch gekennzeichnet, daß die Mischung zusätzlich zu den Komponenten A und B als Komponente C Pigmente, Füllstoffe, Vernetzungskatalysatoren, Korrosionsschutzinhibitoren und weitere Lackhilfsmittel enthält.

23. Verwendung nach Anspruch 21 und 22, dadurch gekennzeichnet, daß der Anteil der Komponente A 50 - 95 Gew.-% und der der Komponente B 5 - 50 Gew.-% betragen, wobei die Summe der Komponenten A und B 100 % beträgt.

24. Verwendung nach Anspruch 21 bis 23, dadurch gekennzeichnet, daß die Komponente A eine zahlenmittlere Molmasse von 500 - 20 000 aufweist.

25. Verwendung nach Anspruch 21 bis 24, dadurch gekennzeichnet, daß die Komponente B eine zahlenmittlere Molmasse von 200 - 10 000 aufweist.

26. Verwendung nach Anspruch 21 bis 25, dadurch gekennzeichnet, daß die Komponente B ein Polyacrylatharz aus den folgenden Monomeren ist:

a) 10 - 50 Gew.-% Acrylsäurealkylester mit 1 bis 18 Kohlenstoffatomen im Alkylrest und/oder Methacrylsäureester mit 2 bis 18 Kohlenstoffatomen im Alkylrest,

b) 0 - 60 Gew.-% Methacrylsäuremethylester,

c) 0 - 35 Gew.-% Styrol, α-Methylstyrol, o- und/oder p-Chlorstyrol, p-tert.-Butylstyrol, Vinyltoluol und/oder Vinylcarbazol und

d) 2 - 35 Gew.-% Acrylsäure- und/oder Methacrylsäure-β-Hydroxyalkylester oder einer anderen β-Hydroxylalkylestergruppen enthaltenden, olefinischen, ungesättigten, polymerisierbaren Verbindung, wobei die Summe der Bestandteile a, b, c und d 100 % beträgt.

27. Verwendung nach Anspruch 21 bis 26, <u>dadurch gekennzeichnet</u>, daß die Bindemittelmischung in feinteiliger, fester Form vorliegt.

28. Verwendung der Bindemittelmischung nach Anspruch 27 für Pulverlacke.

29. Verwendung nach Anspruch 21 bis 25, <u>dadurch gekennzeichnet</u>, daß die Bindemittelmischung gelöst in einem organischen Lösungsmittel vorliegt.

30. Verwendung der Bindemittelmischung nach Anspruch 29 für Einbrennlacke.

31. Verwendung nach Anspruch 21 bis 25, <u>dadurch gekennzeichnet</u>, daß die Bindemittelmischung nach

0131125

Protonisierung mit Säure in Form einer wäßrigen Lösung oder Dispersion vorliegt.

32. Verwendung der Bindemittelmischung nach Anspruch 31 für die kathodische Elektrotauchlakkierung.

33. Verwendung der Bindemittelmischung nach Anspruch 27 in feinteiliger Form für wäßrige Pulver-Slurries.

Europäisches Patentamt

# EUROPÄISCHER RECHERCHENBERICHT

**0131125**
Nummer der Anmeldung

EP 84 10 6020

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | EP-A-0 066 859 (HERBERTS)<br>* Zusammenfassung; Seite 11, Zeilen 20-22 * | 1-5,9-14,20-25,31,32 | C 09 D 5/44<br>C 09 D 3/58<br>C 08 G 59/62<br>C 08 G 59/56 |
| Y | US-A-4 252 703 (HANS-PETER PATZSCHKE)<br>* Spalte 16; Anspruch 1 * | 1-5,9-14,20-25,31,32 | |
| A | EP-A-0 040 867 (SHELL)<br>* Zusammenfassung * | 1,7-11,16,18,27-32 | |
| | | | **RECHERCHIERTE SACHGEBIETE (Int. Cl.4)** |
| A | EP-A-0 057 389 (BASF)<br>& DE - A - 3 103 642 (Kat. D) | 1,7-11,16-22,27-33 | C 09 D<br>C 08 G |
| A,D | EP-A-0 012 463 (SHELL) | 1 | |

Der vorliegende Recherchenbericht wurde für alle Patentansprüche erstellt.

| Recherchenort | Abschlußdatum der Recherche | Prüfer |
|---|---|---|
| DEN HAAG | 18-09-1984 | GIRARD Y.A. |

**KATEGORIE DER GENANNTEN DOKUMENTEN**
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503. 03.82